# EUROPÄISCHE PATENTSCHRIFT

(11) **EP 1 979 577 B1**
(45) Veröffentlichungstag und Bekanntmachung des Hinweises auf die Patenterteilung: **16.11.2011**
(21) Anmeldenummer: 07702378.6
(22) Anmeldetag: 19.01.2007
(51) Int. Cl.: F01D 11/00

(54) **LEITSCHAUFELSEGMENT EINER GASTURBINE UND VERFAHREN ZU DESSEN HERSTELLUNG**
GUIDE BLADE SEGMENT OF A GAS TURBINE AND METHOD FOR ITS PRODUCTION
SEGMENT D'AUBE DE GUIDAGE D'UNE TURBINE A GAZ ET PROCEDE POUR SA FABRICATION

(30) Priorität: 28.01.2006 DE 102006004090
(43) Veröffentlichungstag der Anmeldung: 15.10.2008
(73) Patentinhaber: MTU Aero Engines GmbH, 80995 München (DE)
(72) Erfinder: MEIER, Reinhold, 84405 Dorfen (DE); MÜLLER, Claus, 90542 Eckental (DE); DUSEL, Karl-Heinz, 85716 Unterschleissheim (DE); HUTTNER, Roland, 82287 Jesenwang (DE)
(86) Internationale Anmeldenummer: PCT/DE2007/000097
(87) Internationale Veröffentlichungsnummer: WO 2007/085230

(56) Entgegenhaltungen:
- EP-A- 0 894 944
- EP-A1- 1 531 234
- DE-A1- 10 259 963

## Beschreibung

Die Erfindung betrifft ein Verfahren zum Herstellen eines Leitschaufelsegments einer Gasturbine nach dem Oberbegriff des Anspruchs 1.

Gasturbinen, insbesondere Gasturbinenflugtriebwerke, verfügen im Bereich ihrer Verdichter sowie Turbinen über feststehende Leitschaufelkränze sowie rotierende Laufschaufelkränze, wobei die feststehende Leitschaufelkränze einem feststehenden Gehäuse und die rotierende Laufschaufelkränze einem rotierenden Rotor der Gasturbine zugeordnet sind. Die feststehenden Leitschaufelkränze werden von mehreren Leitschaufelsegmenten gebildet, wobei jedes Leitschaufelsegment mindestens eine Leitschaufel umfasst. Dem radial innenliegenden Ende der oder jeder Leitschaufel eines Leitschaufelsegments ist ein Innendeckband zugeordnet, wobei zur Gewährleistung eines optimalen wirkungsgrads einer Gasturbine ein radial innenliegender Spalt zwischen dem Innendeckband der Leitschaufeln und dem Rotor der Gas-turbine abzudichten ist. Die Abdichtung des radial innenliegenden Spalts zwischen dem Innendeckband und dem Rotor der Gasturbine erfolgt über eine sogenannte Inner Air Seal Dichtung, wobei hierzu dem Innenband der Leitschaufelsegmente Dichtungselemente zugeordnet sind. Diese Dichtungselemente können als Wabendichtungen ausgeführt sein.

Bei aus der Praxis bekannten Leitschaufelsegmenten sind die Wabendichtungen als separate Baugruppen ausgeführt und zum Beispiel durch Löten mit dem Innendeckband der Leitschaufelsegmente fest verbunden. Dies resultiert in einem hohen Fertigungsaufwand, da die Wabendichtungen einerseits als separate Bauteile über separate Herstellverfahren gefertigt werden müssen, und da andererseits die Wabendichtungen über ein Fügeverfahren mit dem Innendeckband verbunden werden müssen. Weiterhin stellen Lotverbindungen meist thermomechanische Schwachstellen dar.

Aus dem Dokument De 102 59 963 A1 ist es bekannt, Wabendichtungen durch pulvermetallurgisches Spritzgießen herzustellen. Aus diesem Dokument ist es ebenfalls bekannt, die Wabendichtungen einstückig / integral mit Tragelementen, z. B. mit Schaufeldeckbändern, herzustellen. Die pulvermetallurgische Herstellung hat den Nachteil, dass beim Sinterprozess eine beachtliche Schrumpfung des Werkstoffvolumens erfolgt, welche z. B. die Verbindung mit angrenzenden Bauteilen schwächen oder zerstören kann.

Hiervon ausgehend liegt der vorliegenden Erfindung das Problem zu Grunde, ein neuartiges Verfahren zum Herstellen eines Leitschaufelsegments einer Gasturbine mit deckbandintegraler Wabendichtung schaffen. Dieses Problem wird durch ein Verfahren im Sinne von Anspruch 1 gelöst. Erfindungsgenäß ist die Wabendichtung als integraler Bestandteil des Innendeckbands des Leitschaufelsegments an das Innendeckband durch Elektronenstrahlschmelzen oder Laserschmelzen angeformt.

Dies erfolgt vorzugsweise dadurch, dass die Wabendichtung sowie das Innendeckband des Leitschaufelsegments in einen Formgebungsprozess integral hergestellt werden. Durch die integrale Ausführung der Wabendichtung nit dem Innendeckband des Leitschaufelsegments können fertigungskosten reduziert werden, da einerseits ein separater Fertigungsprozess für die Wabendichtung und andererseits ein Fügen der Wabendichtung an das Innendeckband des Leitschaufelsegments entfällt. Durch den Wegfall von Fügeverbindungen zwischen der Wabendichtung und dem Innendeckband des Leitschaufelsegments kann des Weiteren die Standzeit von Leitschaufelsegmenten erhöht werden, da die nach dem Stand der Technik erforderlichen Fügeverbindungen bzw. Fügestellen zwischen der Wabendichtung und dem Innendeokband des Leitsehaufelsegments Schwachstellen darstellen. Insbesondere wird bei Verdichterleitschaufelsegmenten durch den Wegfall der dort üblichen Lötwärmebehandlung die Schwingfestigkeit der Leitschaufelsegmente nicht herabgesetzt.

Ausführungsbeispiele der Erfindung werden, ohne hierauf beschränkt zu sein, an Hand der Zeichnung näher erläutert. Dabei zeigt:
- Fig. 1: einen schematisierten Ausschnitt aus einem erfindungsgemäßen Leitschaufelsegment einer Gasturbine im Bereich eines Innendeckbands des Leitschaufelsogments; und
- Fig. 2: ein Detail des Innendeckbands der Fig. 1 im Bereich eines als integraler Bestandteil des Innendeckbands ausgebildeten Dichtungselements.

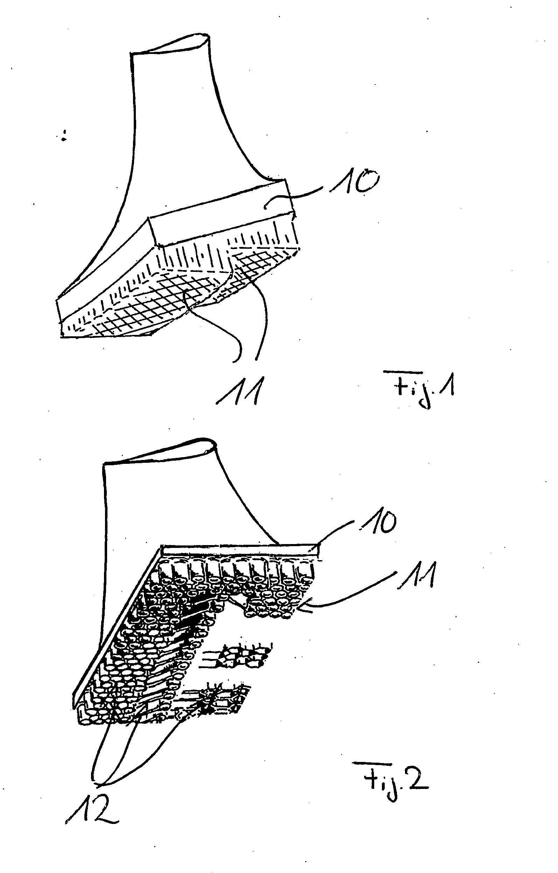

Fig. 1 zeigt einen Ausschnitt aus einem erfindungsgemäßen Leitschaufelsegment einer Gasturbine im Bereich eines an radial innenliegenden Enden von Leitschaufeln des Leitschaufelsegments angeordneten Innendeckbands 10, wobei dem Innendeckband 10 im Ausführungsbeispiel der Fig. 1 eine Wabendichtung 11 zugeordnet ist. Die Wabendichtung 11 dient der Abdichtung eines radial innenliegenden Spalts zwischen den Leitschaufelsegment und einem Gasturbinenrotor.

Im Sinne der hier vorliegenden Erfindung ist die Wabendichtung 11 integraler Bestandteil des Innendeckbands 10 des Leitschaufelsegments. Die Wabendichtung 11 ist dabei über ein generatives Fertigungsverfahren integral an das Innendeckband 10 angeformt. Die Wabendichtung 11 ist aus mehreren Waben 12 ausgebildet, wobei die Waben 12 beliebig konturiert sein können. So zeigt Fig. 2 exemplarisch Waben 12, die in Querschnitt rund konturiert sind, sowie Waben 12, die in Querschnitt sechseckig bzw. wabenförmig konturiert sind.

Bei der Herstellung werden die Wabendichtung und das Innendeckband durch sogenannte Rapid Prototyping Verfahren schichtweise integral - d.h. einstückig - aufgebaut. Als Fertigungsverfahren wird das Elektronenstrahlschmelzen oder das Laserschmelzen verwendet. Hierfür können Kobalt, Nickel, Eisen- aber auch Titanbasislegierungen zum Einsatz kommen, indem diese Materialien als schmelzbare Pulver mittels einer Strahlungsquelle in natürlicher oder künstlicher Umgebung schichtweise direkt aus den CAD-Daten des Bauteils aufgebaut werden.

Durch den schichtweisen Aufbau können massive und auch Hohlstrukturen belastungsgerecht hergestellt werden. Das Dichtungselement kann somit auf einfache Art als einseitig geöffneter Hohlraum (z.B. Honigwaber), als metallische Gitter- oder Schaumstruktur aufgebaut werden.

Im Anschluss an die eigentliche Herstellung kann auch noch eine Fertigbearbeitung auf Endkontur durch abtragende Verfahren wie Fräsen, Drehen, Erodieren oder elektrochemische Bearbeitung durchgeführt werden.

## Patentansprüche

1. Verfahren zum Herstellen eines Leitschaufelsegments einer Gasturbine, wobei das Leitschaufelsegment mindestens eine Leitschaufel und ein dem radial innenliegenden Ende der oder jeder Leitschaufel zugeordnetes Innendeckband (10) aufweist, und wobei an das Innendeckband des Leitschaufelsegments als integraler Bestandteil desselben eine Wabendichtung (12), welche der Abdichtung eines radial innenliegenden Spalt zwischen dem Leitschaufelsegment und einem Gasturbinenrotor dient, angeformt wird,
wobei die Wabendichtung (11) an das Innendeckband (10) durch Elektronenstrahlschmelzen oder Laserschmelzen angefornt wird.

2. Verfahren nach Anspruch 1, **dadurch gekennzeichnet, dass** die Wabendichtung und das Innendeckband (10) durch das selbe Fertigungsverfahren ausgeformt werden.

## Claims

1. Method for producing a guide-blade segment of a gas turbine, wherein the guide-blade segment has at least one guide blade and an inner cover band (10) that is associated with the radially inner end of the or each guide blade, and wherein pre-formed on the inner cover band of the guide-blade segment as an integral component of the same there is a honeycomb seal (11) which serves to seal a radially inner gap between the guide-blade segment and a gas-turbine rotor,
wherein the honeycomb seal (11) is pre-formed on the inner cover band (10) by means of electron-beam melting or laser melting.

2. Method according to claim 1, **characterised in that** the honeycomb seal and the inner cover band (10) are formed to shape by means of the same manufacturing method.

## Revendications

1. Procédé pour produire un segment d'aube de guidage d'une turbine à gaz, le segment d'aube de guidage présentant au moins une aube de guidage et un anneau de renforcement intérieur (10) associé à l'extrémité qui s'étend à l'intérieur radialement de la, ou de chaque aube de guidage et une garniture alvéolaire (11), qui sert d'étanchéification d'une fente qui s'étend à l'intérieur radialement entre le segment d'aube de guidage et un rotor de turbine à gaz, étant formée sur l'anneau de renforcement intérieur du segment d'aube de guidage comme partie intégrante de ce dernier, et la garniture alvéolaire (11) étant formée sur l'anneau de renforcement intérieur (10) par fusion à faisceau électronique ou fusion laser.

2. Procédé selon la revendication 1, **caractérisé en ce que** la garniture alvéolaire et l'anneau de renforcement intérieur (10) sont produits par le même procédé de fabrication.
